Europäisches Patentamt

European Patent Office

Office européen des brevets

(19)

(11) Numéro de publication: **0 295 972**
**A1**

## (12) DEMANDE DE BREVET EUROPEEN

(21) Numéro de dépôt: 88401048.9

(22) Date de dépôt: 28.04.88

(51) Int. Cl.⁴: **G 05 B 19/10**

(30) Priorité: 29.04.87 FR 8706275

(43) Date de publication de la demande:
**21.12.88 Bulletin 88/51**

(84) Etats contractants désignés:
**BE DE ES GB IT NL**

(71) Demandeur: **Parienti, Raoul**
**5, rue de Belgique**
**F-06000 Nice (FR)**

**Kanny, Louis**
**6, avenue des Fusiliés**
**F-77360 Vaires sur Marne (FR)**

(72) Inventeur: **Parienti, Raoul**
**5, rue de Belgique**
**F-06000 Nice (FR)**

(54) **Discriminateur pour système d'alarme.**

(57) Le discriminateur est destiné à personnaliser un système d'alarme en permettant la programmation d'une séquence sonore à la place du son continu des systèmes avertisseurs. Pour cela, il se place entre le boîtier d'alarme et les systèmes avertisseurs. Il transforme le signal positif continu qu'il reçoit du boîtier d'alarme en une suite de créneaux positifs et nuls qu'il envoie aux systèmes avertisseurs. La programmation est réalisée grâce à une série d'interrupteurs (3) ou à un interrupteur rotatif.

Fig 2

EP 0 295 972 A1

## Description

### DISCRIMINATEUR DE SYSTEME AVERTISSEUR SONORE

La présente invention concerne un discriminateur pour systèmes avertisseurs sonores ou optiques reliés à des systèmes d'alarme.

L'insécurité actuelle a conduit à une prolifération des systèmes d'alarme et en particulier, les alarmes destinées aux véhicules automobiles.

La standardisation et la production en grande série font que les gammes de sons disponibles sont peu nombreuses. Le problème est donc de reconnaître son alarme parmi toutes les alarmes susceptibles de se déclencher.

Pour résoudre ce problème, nous proposons d'insérer entre les systtèmes avertisseurs et la commande électrique venant de l'alarme, un boîtier programmable susceptible de moduler l'alimentation électrique desdits systèmes avertisseurs. La programmation par l'utilisateur d'une certaine séquence lui permettra de reconnaître à coup sûr son alarme lors du déclenchement de celle-ci.

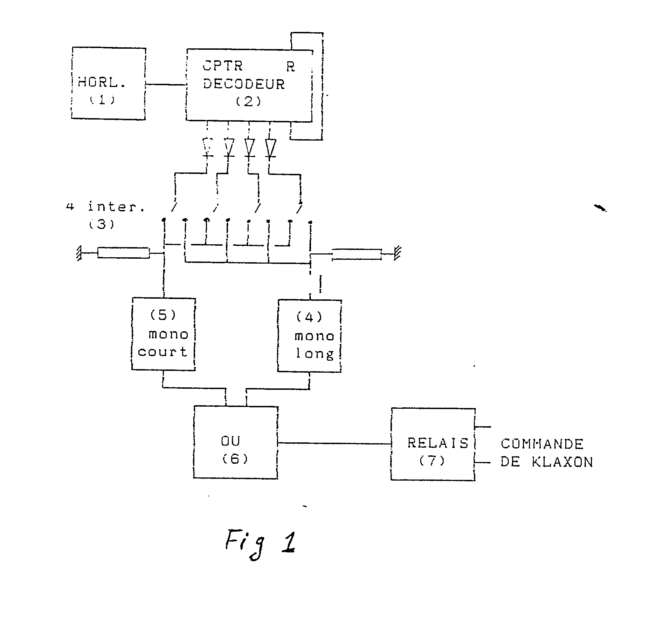

A cet effet, un mode de réalisation particulier de l'appareil peut être une horloge (1) attaquant un compteur/décodeur (2) dont les sorties viennent déclencher via un système de sélection par interrupteur (3) deux monostables de durée différente, un long et un court (4) et (5). Un "ou" logique (6) est réalisé entre les deux sorties de monostables et le résultat attaque un composant de commutation (7) qui transmettra l'information aux commandes de l'avertisseur (Cf fig. 1).

L'alimentation électrique peut être prise directement sur la sortie de commande venant du boîtier d'alarme qui est du type positif, mais elle peut aussi être prise de façon extérieure sur le positif permanent du véhicule.

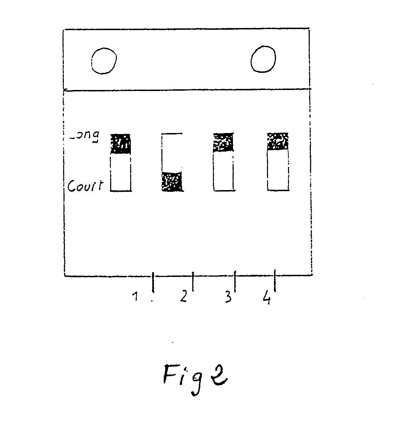

L'appareil peut comporter quatre bornes de branchement électrique extérieures:
-1ère borne et 2ème borne : entrée de détection venant du boîtier de l'alarme.
-3ème borne et 4ème borne : sortie de commande vers les systèmes avertisseurs (Cf fig.2).

Diverses modifications et variantes peuvent bien entendu être apportées à la description qui précède sans sortir pour autant du cadre ni de l'esprit de l'invention.

Le discriminateur est caractérisé par le fait que les moyens de programmation peuvent être réalisés grâce à un certain nombre d'interrupteurs (4 à au moins deux positions ou un interrupteur rotatif à plusieurs positions).

Le discriminateur est caractérisé par le fait qu'il peut être alimenté soit par le signal venant du boîtier d'alarme, soit par une alimentation extérieure.

Le discriminateur est caractérisé par le fait que la sortie de commande peut être soit du type positif, c'est-à-dire alimentation, soit du type négatif, c'est-à-dire mise à la masse soit du type commutation flottante de deux sorties (isolées galvaniquement).

## Revendications

1. Discriminateur caractérisé par le fait qu'il transforme un signal électrique positif permanent en un signal constitué de créneaux positifs ou négatifs de longueur variable et programmable permettant son identification. Il comporte à cet effet, une horloge (1), un compteur/décodeur (2) piloté par ladite horloge, des moyens de programmation (3) pilotant deux monostables (4) et (5), une logique combinatoire mixant la sortie des deux monostables (6).

2. Discriminateur selon la revendication 1 caractérisé par le fait que les deux monostables (4) et (5) sont de durée différente, l'une étant courte, l'autre longue.

3. Discriminateur selon l'une quelconque des revendications 1 à 2 caractérisé par le fait que les moyens de programmation peuvent être réalisés grâce à un certain nombre d'interrupteurs (3) à au moins deux positions ou un interrupteur rotatif à plusieurs positions.

4. Discriminateur selon l'une quelconque des revendications 1 à 3 caractérisé par le fait qu'il peut être alimenté soit par le signal venant du boîtier d'alarme, soit par une alimentation extérieure.

5. Discriminateur selon l'une quelconque des revendications 1 à 4 caractérisé par le fait que la sortie de commande peut être soit du type positif, c'est-à-dire alimentation, soit du type négatif, c'est-à-dire mise à la masse soit du type commutation flottante de deux sorties (isolées galvaniquement).

Fig 1

0295972

Fig 2

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | US-A-4 539 548 (D.F. ARLASKY) <br> * En entier * <br> --- | 1-5 | G 05 B 19/10 |
| A | US-A-3 922 672 (P.R. MALLORY & CO., INC.) <br> * En entier * <br> ----- | 1-5 | |

DOMAINES TECHNIQUES RECHERCHES (Int. Cl.4)

B 60 R
G 05 B

**Le présent rapport a été établi pour toutes les revendications**

| Lieu de la recherche | Date d'achèvement de la recherche | Examinateur |
|---|---|---|
| LA HAYE | 10-08-1988 | MOYLE J.F. |